**Europäisches Patentamt**

**European Patent Office**

**Office européen des brevets**

(11) Veröffentlichungsnummer: **0 184 151**
**A2**

## (12) EUROPÄISCHE PATENTANMELDUNG

(21) Anmeldenummer: 85115161.3

(22) Anmeldetag: 29.11.85

(51) Int. Cl.⁴: **C08L 71/04 , C08L 77/00 , C08L 25/08 , C08L 53/02**

(30) Priorität: 06.12.84 DE 3444435

(43) Veröffentlichungstag der Anmeldung:
11.06.86 Patentblatt 86/24

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Taubitz, Christof, Dr.
In der Dreispitz 15
D-6706 Wachenheim(DE)
Erfinder: Seiler, Erhard, Dr.
Erpolzheimer Strasse 1
D-6700 Ludwigshafen(DE)
Erfinder: Hambrecht, Jürgen, Dr.
Werderstrasse 30
D-6900 Heidelberg(DE)

(54) **Thermoplastische Formmassen.**

(57) Thermoplastische Formmassen enthaltend

A. 94,9 bis 5 Gew.-Teile mindestens eines Polyphenylenethers der bis zur Hälfte durch Styrol-Polymerisate ersetzt sein kann

B. 5 bis 94,9 Gew.-Teile mindestens eines thermoplastischen Polyamids

C. 0,1 bis 30 Gew.-Teile mindestens eines Copolymeren aufgebaut aus vinylaromatischen Monomeren, die sich vom Benzol ableiten, die bis zu einem Zwölftel durch Acrylnitril oder Methacrylnitril ersetzt sein können sowie (Meth)acrylsäure oder deren $C_1$- bis $C_{12}$-Alkylester mit der Maßgabe, daß sich die Gewichtsteile der Komponenten A, B und C auf 100 Gew.-Teile ergänzen und

D. gegebenenfalls Zusatzstoffe in wirksamen Mengen.

EP 0 184 151 A2

Thermoplastiche Formmassen

Polyphenylenether sind Kunstharze mit hervorragenden thermischen, mechanischen und elektrischen Eigenschaften. Technisch wird auch ein Gemisch aus einem Polyphenylenether und einem Styrolpolymerisat hergestellt. Polyphenylenether und das genannte modifizierte Produkt haben jedoch den Nachteil, daß sie nur eine geringe Lösungsmittelbeständigkeit aufweisen. Ihre Verwendungsbreite ist deshalb begrenzt. Aus der US-PS 3379792 ist bekannt, daß die Schmelzflußeigenschaft von Polyphenylenether durch den Zusatz einer geringen Menge an Polyamid verbessert wird. Ferner wird jedoch in dieser Druckschrift festgestellt, daß bei einem Polyamidzusatz in einer Menge von über 20 % andere Eigenschaften des Polyphenylenethers in beträchtlichem Ausmaß verschlechtert werden. Aus der GB-Patentanmeldung 2054623 sind auch schon Formmassen aus Polyphenylenether und größeren Anteilen an Polyamiden bekannt. Hierbei ist es jedoch erforderlich, einen längeren Mischvorgang bei Schmelztemperatur vorzunehmen. Beim Mischen bei Schmelztemperatur über längere Zeit treten jedoch leicht Abbauerscheinungen ein.

Es war deshalb die technische Aufgabe gestellt, thermoplastische Formmassen zur Verfügung zu stellen, die neben einer guten Verarbeitbarkeit gute thermische, mechanische und elektrische Eigenschaften aufweisen und sich insbesondere durch eine hohe Schlagzähigkeit und gute Lösungsmittelbeständigkeit auszeichnen.

Diese Aufgabe wird gelöst durch thermoplastische Formmassen enthaltend

A. 94,9 bis 5 Gew.-Teile mindestens eines Polyphenylenethers der bis zur Hälfte durch Styrolpolymerisate ersetzt sein kann

B. 5 bis 94,9 Gew.-Teile mindestens eines thermoplastischen Polyamids

C. 0,1 bis 30 Gew.-Teile mindestens eines Copolymeren, aufgebaut aus vinylaromatischen Monomeren die sich vom Benzol ableiten, wobei diese bis zu einem Zwölftel durch Acrylnitril oder Methacrylnitril ersetzt sein können sowie (Meth)acrylsäure oder deren $C_1$- bis $C_{12}$-Alkylester. Mit der Maßgabe, daß sich die Gew.-Teile der Komponenten A, B und C auf 100 Gew.-Teile ergänzen und

D. gegebenenfalls Zusatzstoffe in wirksamen Mengen.

Die neuen thermoplastischen Formmassen haben den Vorteil, daß sie gut verarbeitbar sind, ein hohes mechanisches Niveau haben und zudem sich durch eine gute Schlagzähigkeit und Lösungsmittelresistenz auszeichnen.

Die neuen thermoplastischen Formmassen sind insofern bemerkenswert, als nach allgemein verbreiteter Ansicht in Gemischen aus Polyphenylenethern und einem Polyamid keine Verträglichkeit zwischen den beiden Kunststoffen besteht, da beim Verformen solcher Mischungen meist eine Phasentrennung eintritt wie aus der DE-OS 3027104 hervorgeht.

Die erfindungsgemäßen thermoplastischen Formmassen enthalten als Komponente A 94,9 bis 5 Gew.-Teile mindestens eines Polyphenylenethers. Bei den Polyphenylenethern handelt es sich um Verbindungen auf Basis von in 2- und/oder 6-Stellung zum Sauerstoffatom substituierten, insbesondere disubstituierten, Polyphenylenoxiden, wobei der Ethersauerstoff der einen Einheit an den Benzolkern der benachbarten Einheit gebunden ist. Vorteilhaft sind mindestens 50 Einheiten miteinander verknüpft. Geeignete Polyphenylenether haben als Substituenten in 2,6-Stellung zum Sauerstoffatom Halogenatome, wie Chlor oder Brom, Alkylreste mit 1 bis 4 Kohlenstoffatomen, die kein alphaständiges tertiäres Wasserstoffatom aufweisen, z.B. Methyl-, Ethyl-, Propyl- oder Butylreste. Die Alkylreste können auch durch Halogenatome, wie Chlor odr Brom oder durch eine Hydroxylgruppe substituiert sein. Geeignete Polyphenylenether können ferner Alkoxyreste mit bis zu 4 Kohlenstofatomen oder gegebenenfalls durch Halogenatome oder Alkylgruppen substituierte Phenylreste als Substituenten enthalten. Beispielhaft seien genannt: Poly(2,5-dilauryl-1,4-phenylen)oxid, Poly(diphenyl-1,4-phenylen)oxid, Poly(2,6-dimethoxy-1,4-phenylen)oxid, Poly(2,6-diethoxy-1,4-polyphenylen)oxid, Poly(2-methoxy-6-ethoxy-1,4-phenylen)oxid, Poly(2-ethyl-6-stearyloxy-1,4-phenylen)oxid, Poly(2,6-dichlor-1,4-phenylen)oxid, Poly(2-methyl-6-phenyl-1,4-phenylen)oxid, Poly(2,6-dibenzyl-1,4-phenylen)oxid, Poly(2-ethoxy-1,4-phenylen)oxid, Poly(2-chlor-1,4-phenylen)oxid, Poly(2,5-dibrom-1,4-phenylen)oxid. Ebenfalls geeignet sind Copolymere von verschiedenen Phenolen, wie 2,6-Dimethylphenol und 2,3,6-Trimethylphenol.

Besonders bevorzugt für die erfindungsgemäßen Abmischungen sind solche, bei denen die Substituenten Alkyle mit 1 bis 4 C-Atomen sind, wie Poly(2,6-dimethyl-1,4-phenylen)oxid, Poly(2,6-diethyl-1,4-phenylen)oxid, Poly(2-methyl-6-ethyl-1,4-polyphenylen)oxid, Poly(2-methyl-6-propyl-1,4-phenylen)oxid, Poly(2,6-dipropyl-1,4-phenylen)oxid und Poly(2-ethyl-6-propyl-1,4-phenylen)oxid. Vorzugsweise haben die verwendeten Polyphenylenether eine Grenzviskosität von 0,4 bis 0.7 dl/g (gemessen in Chloroform bei 30°C). Bevorzugte Formmassen enthalten 20 bis 70 Gew.-Teile, insbesondere 35 bis 60 Gew.-Teile Polyphenylenether.

Die als Komponente A verwendeten Polyphenylenether können bis zur Hälfte durch Styrolpolymerisate ersetzt sein. Vorteilhaft werden ein Zehntel bis zur Hälfte der Menge an Polyphenylenether durch Styrolpolymerisate ersetzt. Geeignete Styrolpolymerisate sind beispielsweise Polystyrol, Poly-α-methylstyrol oder Poly-p-methylstyrol, insbesondere Polystyrol. Besonders bevorzugt werden Styrolpolymerisate die 2 bis 20 Gew.% eines kautschukelastischen Polymerisats, insbesondere auf Basis Butadien, z.B. Styrol-Butadien-Polymerisate oder Polybutadien, ferner Butadien-Styrol-Blockpolymerisate enthalten, verwendet. Falls Styrol-Dien-Blockcopolymerisate verwendet werden hat es sich bewährt, wenn man bis zu einem Fünftel des Gehalts an Polyphenylenoxid durch Butadien oder Isopren-Styrol-Blockpolymerisate oder deren hydrierte Produkte ersetzt.

Als Komponente B enthalten die erfindungsgemäßen Formmassen 5 bis 94,9 Gew.-Teile mindestens eines thermoplastischen Polyamids. Geeignet sind lineare Polyamide z.B. mit einer relativen Viskosität von 2,2 bis 4,5, gemessen als 1 gew.%ige Lösung in 96 gew.%iger Schwefelsäure bei 23°C. Bevorzugt seien genannt Polyamide, die sich von Lactamen mit 7 bis 13 Ringgliedern ableiten, wie Polycaprolactam, Polycaprylactam oder Polylaurinlactam, sowie Polyamide, die durch Umsetzung von Dicarbonsäuren mit Diaminen erhalten werden. Geeignete Dicarbonsäuren, die auch in beliebigen Kombinationen einsetzbar sind, sind beispielsweise Alkandicarbonsäuren mit 6 bis 12, insbesondere 6 bis 10 Kohlenstoffatomen, Terephthalsäure und Isophthalsäure. Geeignete Diamine, die auch in beliebigen Kombinationen einsetzbar sind, sind beispielsweise Alkandiamine mit 6 bis 12, insbesondere 6 bis 8 Kohlenstoffatomen, ferner m-Xylylendiamin, Bis(4-aminophenyl)methan, Bis(4-aminocyclohexyl)methan oder Bis(4-aminophenyl)propan-2,2. Es ist auch möglich, Mischungen der genannten Polyamide zu verwenden. Besondere technische Bedeutung haben Polyamid-6, Polyamid-66 sowie Polyamide die aus Hexamethylendiamin und Isophthalsäure sowie Terephthalsäure aufgebaut sind, erlangt. Bevorzugte Formmassen enthalten 5 nis 70 Gew.-Teile, insbesondere 25 bis 60 Gew.-Teile eines thermoplastischen Polyamids.

Als Komponente C enthält die erfindungsgemäße thermoplastische Formmasse 0,1 bis 30 Gew.-Teile mindestens eines Copolymerisats das aufgebaut ist aus einem vinylaromatischen Monomeren, das sich vom Benzol ableitet, und das bis zu einem Zwölftel durch Acrylnitril oder Methacrylnitril ersetzt sein kann, sowie (Meth)acrylsäure oder deren $C_1$- bis $C_{12}$-Alkylester. Geeignete vinylaromatische Monomere sind beispielsweise Styrol, α-Methylstyrol oder p-Methylstyrol, insbesondere Styrol. Neben Methacrylsäure oder Acrylsäure werden deren $C_1$- bis $C_4$-Alkylester, insbesondere die tert.-Butylester, bevorzugt.

Bevorzugte Copolymerisate sind aufgebaut aus 70 bis 99,5 Gew.% Styrol, α-Methylstyrol, p-Methylstyrol oder deren Gemische, insbesondere Styrol sowie 0,5 bis 30 Gew.% (Meth)acrylsäure oder deren tert.-Butylester. Vorteilhaft haben die Polymerisate ein Molekulargewicht von 5.000 bis 200.000. Vorteilhafte thermoplastische Formmassen entsprechend der Erfindung enthalten 0,5 bis 30, insbesondere 5 bis 20 Gew.-Teile der Komponente C.

Besonders bevorzugte Copolymerisate aus Styrol und Acrylsäure erhält man durch Polymerisation der Monomeren in einem geeigneten Lösungsmittel z.B. Alkylbenzolen wie Ethylbenzol. In einer bevorzugten Ausführungsform werden Styrol und Acrylsäure bei 140°C mit Radikalstarter oder bevorzugt thermisch (ohne Starter) kontinuierlich bei 9 bar und 4 h Verweilzeit polymerisiert. Nach einer anderen Arbeitsweise erhält man Polymerisate aus Styrol und Acrylsäure durch Pfropfen von Acrylsäure auf Polystyrol in der Schmelze z.B. bei einer Temperatur von 150 bis 250°C, wobei man vorzugsweise einen Radikalstarter mitverwendet.

Es versteht sich, daß sich die Gew.-Teile der Komponenten A, B und C auf 100 Gew.-Teile ergänzen.

Darüberhinaus können die erfindungsgemäßen thermoplastischen Formmassen als Komponente D gegebenenfalls Zusatzstoffe in wirksamen Mengen enthalten. Als Zusatzstoffe seien genannt Hitze- und Lichtstabilisatoren, Gleit- und Entformungsmittel, Färbemittel, wie Farbstoffe und Pigmente in üblichen Mengen. Geeignete Zusatzstoffe sind auch Verstärkungsmittel, wie Glasfasern, Wollastonit, Talkum, Kreide, Zinksulfid, Gipsfasern, synthetische Calciumsilikate, Kaolin, calciniertes Kaolin, in Mengen bis zu 50 Gew.%, vorzugsweise bis 30 Gew.%, bezogen auf die thermoplastische Formmasse, ferner Phosphorverbindungen, wie Phosphate, Phosphorsäureester, Phosphorigsäureester, Phosphinsäureester, Phosphonigsäureester oder organische Phosphinoxide.

Die erfindungsgemäßen thermoplastischen Formmassen erhält man zweckmäßig durch Mischen der Einzelkomponenten bei Temperaturen von 230 bis 320°C in üblichen Mischvorrichtungen, wie Extrudern oder Knetern. Vorteilhaft werden zunächst die Komponenten B und C gemischt und anschließend dieses Gemisch mit der Komponente A gemischt. Falls ein Teil der Komponente A durch Styrolpolymerisate ersetzt ist, ist es vorteilhaft, die Polyphenylenether mit Styrol-Polymerisaten vorzumischen und dieses Gemisch dann mit einem Gemisch aus den Komponenten B und C in der Schmelze zu mischen.

Die erfindungsgemäßen thermoplastischen Formmassen eignen sich zur Herstellung von Formkörpern durch Spritzgießen oder Extrusion.

Der Gegenstand der Erfindung sei an folgenden Beispielen veranschaulicht. Die in den nachfolgenden Beispielen genannten Teile sind jeweils Gewichtsteile.

Vergleichsbeispiel 1

45 Gew.-Teile Polyamid-6 mit einer relativen Viskosität von 3,5 und 55 Gew.-Teile Poly-(2,6-dimethyl-1,4-phenylen)-ether mit einer Viskosität von $\eta$ = 0,6 werden auf einem Zweiwellen-Extruder bei einer Temperatur von 290°C im schmelzflüssigen Zustand gemischt, dann gestrangt und granuliert. Die so erhaltene Formmasse wird zu Prüfkörpern spritzgegossen. Die Eigenschaften sind aus nachfolgender Tabelle zu entnehmen.

Beispiel 1

45 Gew.-Teile Polyamid-6 mit einer relativen Viskosität von 3,5 werden bei einer Temperatur von 290°C mit 10 Gew.-Teilen eines Copolymeren aus 93 Gew.% Styrol und 7 Gew.% Acrylsäure, hergestellt durch kontinuierliche Lösungspolymerisation, in einem Extruder gemischt und anschließend bei dieser Temperatur mit 45 Gew.-Teilen Poly-(2,6-dimethylphenylen)-ether gemischt, gestrangt, abgekühlt und granuliert. Die Eigenschaften der so erhaltenen Formmasse sind aus der nachfolgenden Tabelle zu entnehmen.

Beispiel 2

Man verfährt wie im Beispiel 1 beschrieben, verwendet jedoch 40 Gew.-Teile Polyamid-6, 5 Gew.-Teile des Styrol-Acrylsäure-Copolymeren sowie 55 Gew.-Teile Poly-(2,6-dimethylphenylen)-ether.

Beispiel 3

35 Gew.-Teile Polyamid-6 und 5 Gew.-Teile eines Copolymeren aus 95,5 Gew.% Styrol und 4,5 Gew.% Acrylsäure, hergestellt durch radikalische Pfropfung von Acrylsäure auf Polystyrol in der Schmelze, werden in einem Zweiwellen-Extruder bei einer Temperatur von 290°C gemischt und dann die Schmelze mit 60 Gew.-Teilen Poly-(2,6-dimethylphenylen)-ether vermischt, die Schmelze gestrangt, abgekühlt und granuliert. Die Eigenschaften der so erhaltenen Formmasse sind aus nachfolgender Tabelle zu entnehmen.

Beispiel 4

Man verfährt wie im Beispiel 3 beschrieben, verwendet jedoch 40 Gew.Teile Polyamid-6,6, 10 Gew.-Teile des Styrol-Acrylsäure-Copolymeren und 50 Gew.-Teile Poly-(2,6-dimethylphenylen)-ether.

## Beispiel 5

25 Gew.-Teile Polyamid-6 mit einer relativen Viskosität von 3,5 sowie 10 Gew.-Teile eines Styrol-Acrylsäure-Copolymerisats aus 95,5 Gew.% Styrol und 4,5 Gew.% Acrylsäure, hergestellt durch radikalische Pfropfung von Acrylsäure auf Polystyrol in der Schmelze, werden in einem Extruder bei einer Temperatur von 290°C gemischt, gestrangt und granuliert (Gemisch A). Ferner werden 35 Gew.-Teile Poly-(2,6-dimethylphenylen)-ether sowie 30 Gew.-Teile Polystyrol mit einem Gehalt von 8 Gew.%, bezogen auf Polystyrol, eines Styrol-Butadienkautschuks bei einer Temperatur von 290°C in einem Extruder gemischt, gestrangt und granuliert (Gemisch B). 35 Gew.-Teile des Granulats A und 65 Gew.-Teile des Granulats B werden gemischt und in einem Extruder plastifiziert und in der Schmelze gemischt, dann gestrangt, gekühlt und granuliert. Die Eigenschaften der so erhaltenen Formmasse sind aus nachfolgender Tabelle zu entnehmen.

## Beispiel 6

20 Teile Polycaprolactam, 5 Teile Styrol-Acrylsäure-Copolymer aus 93 Gew.% Styrol und 7 Gew.% Acrylsäure, hergestellt durch kontinuierliche Lösungspolymerisation, und 5 Gew.-Teile Styrol-Acrylsäure-Copolymer aus 95,5 Gew.% Styrol und 4,5 Gew.% Acrylsäure, hergestellt durch radikalische Pfropfung von Acrylsäure auf geschmolzenes Polystyrol, werden in einem Extruder bei einer Temperatur von 290°C gemischt, gestrangt und granuliert (Granulat A). Ferner werden 40 Gew.-Teile Poly-(2,6-dimethylphenylen)-ether und 30 Gew.-Teile Polystyrol, das 8 Gew.%, bezogen auf Polystyrol, eines Styrol-Butadienkautschuks enthält, in einem Extruder bei einer Temperatur von 290°C gemischt, gestrangt und granuliert (Granulat B). 30 Gew.-Teile Granulat A und 70 Gew.-Teile Granulat B werden gemischt und dann in einem Extruder bei 290°C plastifiziert und in der Schmelze gemischt, gestrangt, abgekühlt und granuliert. Die Eigenschaften der so erhaltenen Formmasse sind aus nachfolgender Tabelle zu entnehmen.

| Beispiele | Beispiel | | | | | | |
|---|---|---|---|---|---|---|---|
| | 1 | 2 | 3 | 4 | 5 | 6 | Vgl. |
| Polyamid 6 | 45 | 40 | 35 | | 25 | 20 | 45 |
| Polyamid 66 | | | | 40 | | | |
| PPE ( = 0,6) | 45 | 55 | 60 | 50 | 35 | 40 | 55 |
| Styrol-Acrylsäure-Copolymer 1) | 10 | 5 | | | | 5 | |
| Styrol-Acrylsäure-Copolymer 2) | | | 5 | 10 | 10 | 5 | |
| Polystyrol + 8 Gew.% Polybutadien-Kautschuk | | | | | | 30 | |
| Izod (Kerbschlagzähigkeit) (kg cm/m²) | 5,2 | 5,1 | 4,8 | 5,0 | 11,1 | 9,2 | 2,1 |

1) 93 Gew.% Styrol/7 Gew.% Acrylsäure, hergestellt durch kontinuierliche Lösungspolymerisation

2) 95,5 Gew.% Styrol/4,5 Gew.% Acrylsäure, hergestellt durch radikalische Pfropfung von AS auf das PS in Schmelze.

**Ansprüche**

1. Thermoplastische Formmassen enthaltend

A. 94,9 bis 5 Gew.-Teile mindestens eines Polyphenylenethers der bis zur Hälfte durch Styrol-Polymerisate ersetzt sein kann

B. 5 bis 94,9 Gew.-Teile mindestens eines thermoplastischen Polyamids

C. 0,1 bis 30 Gew.-Teile mindestens eines Copolymeren aufgebaut aus vinylaromatischen Monomeren, die sich vom Benzol ableiten, die bis zu einem Zwölftel durch Acrylnitril oder Methacrylnitril ersetzt sein können sowie (Meth)acrylsäure oder deren $C_1$- bis $C_{12}$-Alkylester

mit der Maßgabe, daß sich die Gewichtsteile der Komponenten A, B und C auf 100 Gew.-Teile ergänzen und

D. gegebenenfalls Zusatzstoffe in wirksamen Mengen.

2. Thermoplastische Formmassen nach Anspruch 1, dadurch gekennzeichnet, daß die Komponente C aus 70 bis 99,5 Gew.% Styrol, α-Methylstyrol oder p-Methylstyrol oder deren Gemische und 0,5 bis 30 Gew.% (Meth)acrylsäure oder deren $C_1$ bis $C_4$-Alkylester aufgebaut ist.

3. Thermoplastische Formmassen nach den Ansprüchen 1 und 2, dadurch gekennzeichnet, daß die Komponente A bis zur Hälfte durch Styrol-Polymerisate, die einen Gehalt an kautschukelastischen Polymerisaten haben, ersetzt ist.

4. Thermoplastische Formmassen nach den Ansprüchen 1 und 2, dadurch gekennzeichnet, daß die Komponente A bis zu einem Fünftel durch Block-Copolymerisate von Butadien und Styrol ersetzt ist.